# EUROPEAN PATENT APPLICATION

(11) **EP 4 451 745 A1**
(43) Date of publication of application: **23.10.2024**
(21) Application number: 21968097.2
(22) Date of filing: 14.12.2021
(51) Int. Cl.: H04W 48/16, H04W 84/06

(54) **TERMINAL, BASE STATION, RADIO COMMUNICATION SYSTEM, AND RADIO COMMUNICATION METHOD**

(71) Applicant: NTT DOCOMO, INC., Tokyo 100-6150 (JP)
(72) Inventor: MIN, Tianyang, Tokyo 100-6150 (JP); TANIGUCHI, Masato, Tokyo 100-6150 (JP)
(74) Representative: Hoffmann Eitle
(86) International application number: PCT/JP2021/046154
(87) International publication number: WO 2023/112180

(57) **Abstract**

A terminal includes a receiving unit that receives an information element related to a specific threshold in an operation where a first frequency for a first terminal located at an altitude lower than the specific threshold and a second frequency for a second terminal located at an altitude higher than the specific threshold are separated from each other, and a control unit that determines whether or not a specific condition related to altitude is satisfied on a basis of the information element related to the specific threshold. If the specific condition is satisfied, the control unit assumes, as a specification procedure for determining a cell to be used by the second terminal, the specification procedure based on levels of priority which is used to determine the cell to be used by the second terminal.

## Description

### [Technical Field]

The present disclosure relates to a terminal, a base station, a radio communication system, and a radio communication method that determines a cell for a UE operated at an altitude higher than a specific threshold.

### [Background Art]

The 3rd Generation Partnership Project (3GPP) specifies the 5th generation mobile communication system (also referred to as 5G, New Radio (NR), or Next Generation (NG)), and is also promoting next-generation specifications called Beyond 5G, 5G Evolution, or 6G.

3GPP Release 15 examines services and use cases where small unmanned aerial vehicles (UAVs) such as drones provided with radio communication modules similar to those provided for UEs are used (see Non-Patent Literature 1).

### [Citation List]

### [Non-Patent Literature]

[Non-Patent Literature 1] 3GPP TR 36.777 V15.0.0, 3rd Generation Partnership Project; Technical Specification Group Radio Access Network; Study on Enhanced LTE Support for Aerial Vehicles (Release 15), 3GPP, December 2017

### [Summary of Invention]

Because UEs (hereinafter, high-altitude UEs) located at altitudes higher than a specific threshold, such as UEs mounted on unmanned aerial vehicles (UAVs), fly above a base station unlike ordinary UEs (hereinafter, low-altitude UEs) located at altitudes lower than the specific altitude, there is a general problem that downlink reception quality of the high-altitude UEs is poor. In order to address such a problem, an operation (frequency separation) where a frequency for high-altitude UEs and a frequency for low-altitude UEs are separated from each other is being examined for the purpose of improving the downlink reception quality of the high-altitude UEs and proposing uplink interference of the high-altitude UEs.

With this background, the inventors have found, as a result of intensive studies, that it is necessary to appropriately determine a cell for high-altitude UEs in a case where frequency separation is applied.

The present disclosure, therefore, has been conceived in view of such circumstances, and an object thereof is to provide a terminal, a base station, a radio communication system, and a radio communication method capable of appropriately determining a cell for high-altitude UEs.

An aspect of the present disclosure is a terminal including: a receiving unit that receives an information element related to a specific threshold in an operation where a first frequency for a first terminal located at an altitude lower than the specific threshold and a second frequency for a second terminal located at an altitude higher than the specific threshold are separated from each other; and a control unit that determines whether or not a specific condition related to altitude is satisfied on a basis of the information element related to the specific threshold. If the specific condition is satisfied, the control unit assumes, as a specification procedure for determining a cell to be used by the second terminal, the specification procedure based on levels of priority which is used to determine the cell to be used by a second terminal.

Another aspect of the present disclosure is a base station including: a transmitting unit that transmits an information element related to a specific threshold in an operation where a first frequency for a first terminal located at an altitude lower than the specific threshold and a second frequency for a second terminal located at an altitude higher than the specific threshold are separated from each other; and a control unit that assumes that a terminal determines whether or not a specific condition related to altitude is satisfied on a basis of the information element related to the specific threshold. If the specific condition is satisfied, the control unit assumes, as a specification procedure for determining a cell to be used by the second terminal, the specification procedure based on levels of priority which is used to determine the cell to be used by the second terminal.

Another aspect of the present disclosure is a radio communication system including: a terminal and a base station. The terminal includes a receiving unit that receives an information element related to a specific threshold in an operation where a first frequency for a first terminal located at an altitude lower than the specific threshold and a second frequency for a second terminal located at an altitude higher than the specific threshold are separated from each other, and a control unit that determines whether or not a specific condition related to altitude is satisfied on a basis of the information element related to the specific threshold. If the specific condition is satisfied, the control unit assumes, as a specification procedure for determining a cell to be used by the second terminal, the specification procedure based on levels of priority which is used to determine the cell to be used by the second terminal.

Another aspect of the present disclosure is a radio communication method including the steps of receiving an information element related to a specific threshold in an operation where a first frequency for a first terminal located at an altitude lower than the specific threshold and a second frequency for a second terminal located at an altitude higher than the specific threshold are separated from each other, determining whether or not a specific condition related to altitude is satisfied on a basis of the information element related to the specific threshold, and assuming, if the specific condition is satisfied, as a specification procedure for determining the cell to be used by the second terminal, the specification procedure based on levels of priority which is used to determine the cell to be used by the second terminal.

### [Brief Description of Drawings]

[FIG. 1] FIG. 1 is an overall schematic configuration diagram of a radio communication system 10.
[FIG. 2] FIG. 2 is a diagram illustrating frequency ranges used in the radio communication system 10.
[FIG. 3] FIG. 3 is a diagram illustrating a configuration example of radio frames, subframes, and slots used in the radio communication system 10.
[FIG. 4] FIG. 4 is a function block configuration diagram of a UE 200.
[FIG. 5] FIG. 5 is a function block configuration diagram of a gNB 100.
[FIG. 6] FIG. 6 is a diagram for describing a problem.
[FIG. 7] FIG. 7 is a diagram illustrating an example of a table related to levels of priority.
[FIG. 8] FIG. 8 is a diagram illustrating an example of an SIB (ASN.1 format).
[FIG. 9] FIG. 9 is a diagram illustrating an example of another SIB (ASN.1 format).
[FIG. 10] FIG. 10 is a diagram illustrating an example of another SIB (ASN.1 format).
[FIG. 11] FIG. 11 is a diagram illustrating an example of an RRC message (ASN.1 format).
[FIG. 12] FIG. 12 is a diagram illustrating an example of a hardware configuration of the gNB 100 and the UE 200.
[FIG. 13] FIG. 13 is a diagram illustrating a configuration example of a vehicle 2001.

### [Modes for Carrying out the Invention]

Hereinafter, an embodiment will be described based on the drawings. Note that, the same functions and configurations are denoted by the same or similar reference signs, and their description will be omitted as appropriate.

### [Embodiment]

### (1) Overall Schematic Configuration of Radio Communication System

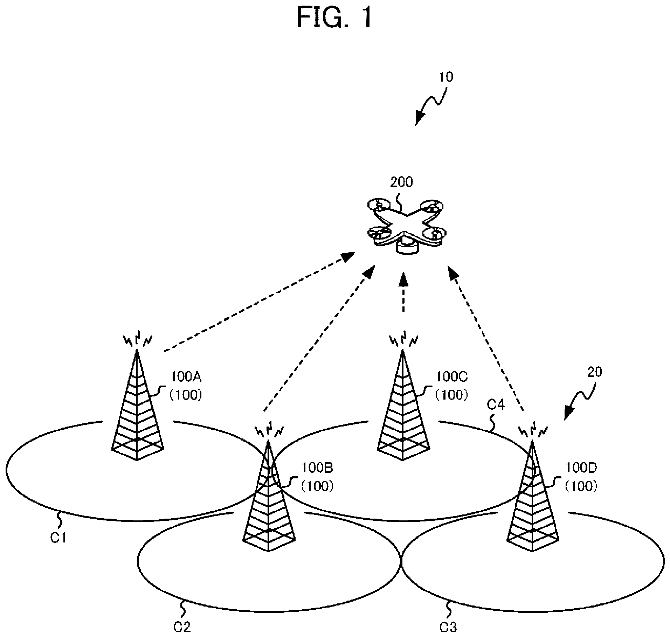

FIG. 1 is an overall schematic configuration diagram of a radio communication system 10 according to the embodiment. The radio communication system 10 is a radio communication system according to 5G New Radio (NR), and includes a Next Generation-Radio Access Network 20 (hereinafter, NG-RAN 20 and a terminal 200 (hereinafter, UE 200).

Note that the radio communication system 10 may be a radio communication system according to a scheme called Beyond 5G, 5G Evolution, or 6G.

The NG-RAN 20 includes a radio base station 100A (hereinafter, gNB 100A) to a radio base station 100D (hereinafter, gNB 100D). The gNBs 100A to 100D include a cell C1 to a cell C4, respectively. Note that the specific configuration of the radio communication system 10 including the number of gNBs and UEs is not limited to that in the example illustrated in FIG. 1.

The NG-RAN 20 actually includes multiple NG-RAN Nodes, or more specifically, gNBs (or ng-eNBs), and is connected to a core network (5GC; not illustrated) according to 5G. Note that the NG-RAN 20 and 5GC may be simply expressed as "networks".

The gNBs 100A to gNB 100D are radio base stations according to 5G, and perform radio communication with the UE 200 in accordance with 5G. The gNBs 100A to 100D and the UE 200 are compatible with Massive MIMO (Multiple-Input Multiple-Output), where a beam BM with higher directivity is generated by controlling radio signals transmitted from multiple antenna elements, carrier aggregation (CA), which uses multiple component carriers (CCs) in a bundle, dual connectivity (DC), where communication is performed with two or more transport blocks at the same time between the UE and each of two NG-RAN Nodes, and the like.

The UE 200 may be UE mounted on small unmanned aerial vehicles (UAVs). The UE 200 mounted on the UAV or the UAV may be referred to as an NR drone. The UE 200 may be referred to as ordinary UE, vehicle UE, IAB (Integrated Access and Backhaul) UE (includes IAB UE in the air), HAPS (High Altitude Platform Station) UE, NTN (Non Terrestrial Network) UE, or the like.

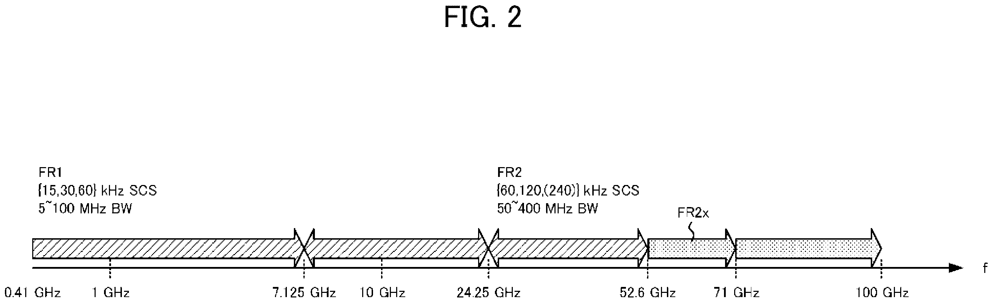

In addition, the radio communication system 10 is compatible with multiple frequency ranges (FRs). FIG. 2 illustrates frequency ranges used in the radio communication system 10.

As illustrated in FIG. 2, the radio communication system 10 is compatible with an FR1 and an FR2. Frequency bands of the respective FRs are as follows.
- FR1: 410 MHz to 7.125 GHz
- FR2: 24.25 GHz to 52.6 GHz

In the FR1, a Sub-Carrier Spacing (SCS) of 15, 30, or 60 kHz may be used, and a bandwidth (BW) of 5 to 100 MHz may be used. The FR2 has higher frequencies than the FR1. An SCS of 60 or 120 kHz (may include 240 kHz) may be used, and a bandwidth (BW) of 50 to 400 MHz may be used.

Note that the SCS may be interpreted as numerology. The numerology is defined in 3GPP TS 38.300 and corresponds to one sub-carrier spacing in a frequency domain.

Furthermore, the radio communication system 10 is also compatible with a higher frequency band than the FR2 frequency band. More specifically, the radio communication system 10 is compatible with a frequency band higher than 52.6 GHz and up to 71 GHz or 114.25 GHz. Such a high frequency band may be referred to as "FR2x" for convenience.

In order to solve a problem that an effect of phase noise becomes large in a high frequency band, in the case of using a band exceeding 52.6 GHz, Cyclic Prefix-Orthogonal Frequency Division Multiplexing (CP-OFDM)/Discrete Fourier Transform-Spread (DFT-S-OFDM) having a larger Sub-Carrier Spacing (SCS) may be applied.

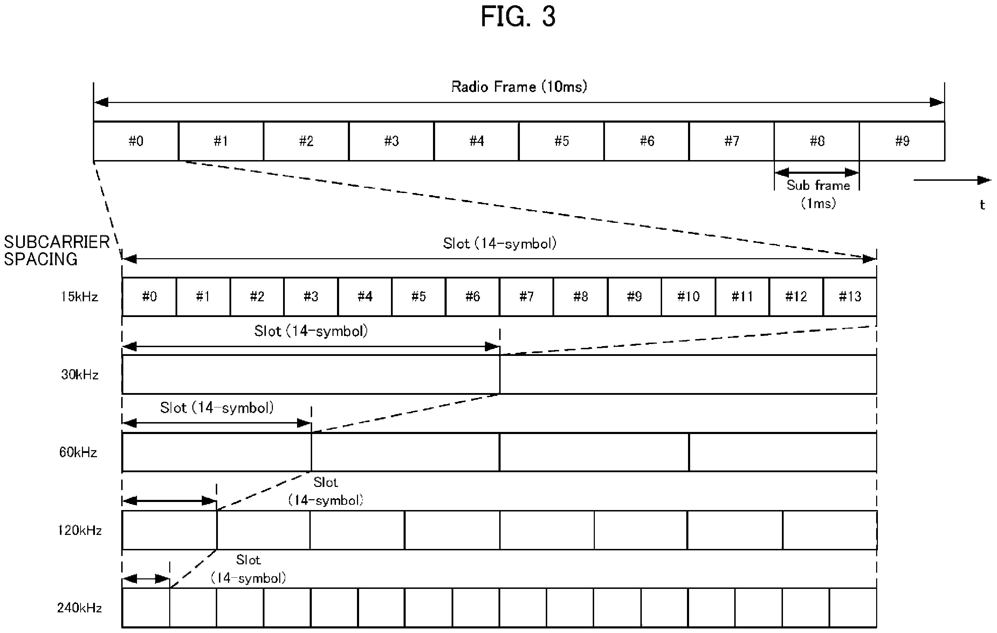

FIG. 3 is a diagram illustrating a configuration example of radio frames, subframes, and slots used in the radio communication system 10.

As illustrated in FIG. 3, each slot includes 14 symbols, and a symbol period (and a slot period) becomes shorter as the SCS becomes larger (wider). The SCS is not limited to intervals (frequencies) illustrated in FIG. 3. For example, 480 kHz, 960 kHz, or the like may be used.

In addition, the number of symbols constituting each slot is not necessarily 14 symbols (for example, 28 symbols or 56 symbols). Furthermore, the number of slots per subframe may be different depending on the SCS.

Note that a time direction (t) illustrated in FIG. 3 may be referred to as a time domain, a symbol period, symbol time, or the like. In addition, a frequency direction may be referred to as a frequency domain, resource blocks, subcarriers, a Bandwidth part (BWP), or the like.

A DMRS is a kind of reference signal, and is prepared for various channels. Here, unless otherwise specified, it may refer to a DMRS for a downlink data channel, or more specifically, a PDSCH (Physical Downlink Shared Channel). A DMRS for an uplink data channel, or more specifically, a PUSCH (Physical Uplink Shared Channel), however, may be construed as being similar to a DMRS for the PDSCH.

The DMRS may be used for channel estimation at the UE 200 as part of a device, that is, for example, coherent demodulation. The DMRS may exist only in resource blocks (RBs) used for PDSCH transmission.

The DMRS may have multiple mapping types. More specifically, the DMRS has mapping type A and mapping type B. In mapping type A, a first DMRS is allocated as a second or third symbol of a slot. In mapping type A, the DMRS may be mapped on the basis of a boundary between slots regardless of where in a slot actual data transmission starts. A reason why the first DMRS is allocated as the second or third symbol of a slot may be construed as for the purpose of allocating the first DMRS after control resource sets (CORESET).

In the mapping type B, the first DMRS may be allocated as a first symbol of data allocation. In other words, a position of the DMRS may be given relatively to a location where data is allocated, not to a boundary between slots.

Furthermore, the DMRS may have multiple types. More specifically, the DMRS has a Type 1 and a Type 2. The Type 1 and the Type 2 are different from each other in mapping and the maximum number of orthogonal reference signals in the frequency domain. The Type 1 can output up to four orthogonal signals in a single-symbol DMRS, and the Type 2 can output up to eight orthogonal signals in a double-symbol DMRS.

The radio communication system 10 can support coverage enhancement (CE) for increasing coverage of a cell (or may be a physical channel) formed by the gNB 100. In the coverage enhancement, a mechanism for increasing a reception success rate of various physical channels may be provided.

For example, the gNB 100 can handle repetitive transmission of the PDSCH (Physical Downlink Shared Channel), and the UE 200 can handle repetitive transmission of the PUSCH (Physical Uplink Shared Channel).

In the radio communication system 10, a slot configuration pattern of time division duplex (TDD) may be set. For example, DDDSU (D: downlink (DL) symbol, S: DL/uplink (UL) or guard symbol, U: UL symbol) may be defined (see 3GPP TS 38.101-4).

The "D" indicates a slot including only DL symbols, and the "S" indicates a slot in which DL, UL, and guard symbols (G) are mixed. The "U" indicates a slot including only UL symbols.

In addition, the radio communication system 10 can perform channel estimation of the PUSCH (or a PUCCH (Physical Uplink Control Channel)) using a demodulation reference signal (DMRS) for each slot and can also perform channel estimation of the PUSCH (or the PUCCH) using DMRSs allocated to a plurality of slots. Such channel estimation may be referred to as Joint channel estimation. Alternatively, it may be called another name such as cross-slot channel estimation.

The UE 200 can transmit DMRSs allocated to (spanning over) a plurality of slots so that the gNB 100 can perform Joint channel estimation using the DMRSs.

Furthermore, in the radio communication system 10, TB processing over multi-slot PUSCH (TBoMS), which processes a transport block (TB) via PUSCHs allocated to a plurality of slots, may be applied to the coverage enhancement.

In the TBoMS, the number of allocated symbols may be the same in each slot like Time Domain Resource Allocation (TDRA) of Repetition type A of the PUSCH, or the number of allocated symbols may be different in each slot like TDRA of a Repetition type B of the PUSCH.

The TDRA may be interpreted as resource allocation in a time domain of the PUSCH specified in 3GPP TS 38.214. The TDRA of the PUSCH may be interpreted as being defined by an information element (IE) of a radio resource control layer (RRC), more specifically, PDSCH-Config or PDSCH-ConfigCommon.

In addition, the TDRA may be interpreted as resource allocation in the time domain of the PUSCH specified in downlink control information (DCI).

### (2) Functional Block Configuration of Radio Communication System

A function block configuration of the radio communication system 10 will be described hereinafter.

First, a function block configuration of the UE 200 will be described.

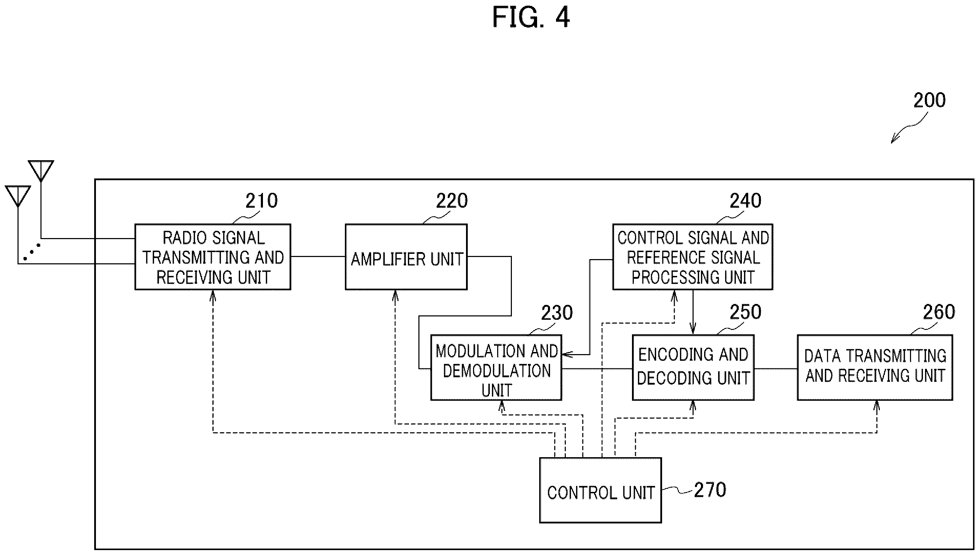

FIG. 4 is a function block configuration diagram of the UE 200. As illustrated in FIG. 4, the UE 200 includes a radio signal transmitting and receiving unit 210, an amplifier unit 220, a modulation and demodulation unit 230, a control signal and reference signal processing unit 240, an encoding and decoding unit 250, a data transmitting and receiving unit 260, and a control unit 270.

The radio signal transmitting and receiving unit 210 transmits and receives radio signals according to NR. The radio signal transmitting and receiving unit 210 deals with Massive MIMO, CA, where multiple CCs are bundled and used, DC, where communication is simultaneously performed between the UE and each of two NG-RAN Nodes, and the like.

Here, the radio signal transmitting and receiving unit 210 may transmit uplink channels (hereinafter, the UL channels).

More specifically, the radio signal transmitting and receiving unit 210 may transmit PUSCHs to the network (gNB 100). The radio signal transmitting and receiving unit 210 may support repetitive transmission (Repetition) of the PUSCH. The UL channels may include a physical uplink shared channel (PUSCH) and a physical uplink control channel (PUCCH). The shared channel may be referred to as a data channel.

A plurality of types of repetitive transmission of the PUSCH may be defined. More specifically, Repetition type A and Repetition type B may be defined. Repetition type A may be interpreted as a mode in which a PUSCH allocated in a slot is repeatedly transmitted. That is, a PUSCH is 14 symbols or less, and cannot be allocated across a plurality of slots (adjacent slots).

Repetition type B, on the other hand, may be interpreted as repetitive transmission of a PUSCH where a PUSCH of 15 symbols or more can be allocated.

A specific period including two or more slots may be interpreted as a period relating to Repetition of the PUSCH (or the PUCCH). For example, the specific period may be indicated by the number of Repetitions, or may be a period of time when a specified number of Repetitions are performed.

Alternatively, the radio signal transmitting and receiving unit 210 may repeatedly transmit a UL channel a specific number of times. More specifically, the radio signal transmitting and receiving unit 210 may repeatedly transmit the PUSCH (or PUCCH) a plurality of times.

The specific period and/or the specific number of times may be indicated by signaling (may be an upper layer of RRC or a lower layer such as DCI; the same holds in the following description) from the network, or may be preset in the UE 200.

The amplifier unit 220 includes a PA (Power Amplifier)/LNA (Low Noise Amplifier) and the like. The amplifier unit 220 amplifies a signal output from the modulation and demodulation unit 230 to a predetermined power level. In addition, the amplifier unit 220 amplifies an RF signal output from the radio signal transmitting and receiving unit 210.

The modulation and demodulation unit 230 executes data modulation and demodulation, transmission power setting, resource block assignment, and the like for each predetermined communication destination (gNB 100 or another gNB). In the modulation and demodulation unit 230, Cyclic Prefix-Orthogonal Frequency Division Multiplexing (CP-OFDM)/Discrete Fourier Transform-Spread (DFT-S-OFDM) may be applied. Furthermore, DFT-S-OFDM may be used not only for uplink (UL) but also for downlink (DL).

The control signal and reference signal processing unit 240 executes processing related to various control signals transmitted and received by the UE 200 and processing related to various reference signals transmitted and received by the UE 200.

More specifically, the control signal and reference signal processing unit 240 receives various control signals transmitted from the gNB 100 via a predetermined control channel, that is, for example, control signals of a radio resource control layer (RRC). Furthermore, the control signal and reference signal processing unit 240 transmits various control signals to the gNB 100 via a predetermined control channel.

The control signal and reference signal processing unit 240 executes processing using reference signals (RSs) such as a Demodulation Reference Signal (DMRS) and a Phase Tracking Reference Signal (PTRS).

The DMRS is a known terminal-specific reference signal (pilot signal) between a base station and a terminal for estimating a phasing channel used for data demodulation. The PTRS is a terminal-specific reference signal designed for the purpose of estimating phase noise, which is a problem in a high frequency band.

Note that the reference signal may include a Channel State Information-Reference Signal (CSI-RS), a Sounding Reference Signal (SRS), and a Positioning Reference Signal (PRS) for position information, in addition to the DMRS and the PTRS.

In addition, the channels include control channels and data channels. The control channels include a PDCCH (Physical Downlink Control Channel), a PUCCH (Physical Uplink Control Channel), a RACH (Random Access Channel), Downlink Control Information (DCI) including a Random Access Radio Network Temporary Identifier (RA-RNTI), a Physical Broadcast Channel (PBCH), and the like.

In addition, the data channels include a PDSCH (Physical Downlink Shared Channel), a PUSCH (Physical Uplink Shared Channel), and the like. Data means data transmitted via a data channel. A data channel may be paraphrased as a shared channel.

Here, the control signal and reference signal processing unit 240 may receive downlink control information (DCI). The DCI includes, as existing fields, fields for storing DCI Formats, Carrier indicator (CI), BWP indicator, FDRA (Frequency Domain Resource Allocation), TDRA (Time Domain Resource Allocation), MCS (Modulation and Coding Scheme), HPN (HARQ Process Number), NDI (New Data Indicator), RV (Redundancy Version), and the like.

A value stored in the DCI Format field is an information element specifying a format of the DCI. A value stored in the CI field is an information element specifying a CC to which the DCI is applied. A value stored in the BWP indicator field is an information element specifying a BWP to which the DCI is applied. A BWP that can be specified by the BWP indicator is configured by an information element (BandwidthPart-Config) included in an RRC message. A value stored in the FDRA field is an information element specifying a frequency domain resource to which the DCI is applied. The frequency domain resource is identified by the value stored in the FDRA field and an information element (RA Type) included in the RRC message. A value stored in the TDRA field is an information element specifying a time domain resource for which the DCI is applied. The time domain resource is identified by the value stored in the TDRA field and the information element (pdsch-TimeDomainAllocationList, pusch-TimeDomainAllocationList) included in the RRC message. The time domain resource may be identified by the value stored in the TDRA field and a default table. A value stored in the MCS field is an information element specifying an MCS to which the DCI is applied. The MCS is identified by the value stored in the MCS and an MCS table. The MCS table may be specified by the RRC message, or may be identified by RNTI scrambling. A value stored in the HPN field is an information element specifying a HARQ Process to which the DCI is applied. A value stored in the NDI is an information element for identifying whether or not data to which the DCI is applied is data transmitted for a first time. A value stored in the RV field is an information element specifying redundancy of data to which the DCI is applied.

In the embodiment, the control signal and reference signal processing unit 240 constitutes a receiving unit that receives an information element related to a specific threshold in an operation where a first frequency for first terminals (for example, low-altitude UEs) located at altitudes lower than the specific threshold is separated from a second frequency for second terminals (for example, high-altitude UEs) located at altitudes higher than the specific threshold. An operation where the first frequency for high-altitude UEs is separated from the second frequency for low-altitude UEs may be referred to as a frequency separation operation. The high-altitude UEs are not limited to UEs mounted on UAVs, and may also include, for example, UEs located on upper floors of buildings.

The encoding and decoding unit 250 performs data division and coupling, channel coding and decoding, and the like for each predetermined communication destination (gNB 100 or another gNB).

More specifically, the encoding and decoding unit 250 divides data output from the data transmitting and receiving unit 260 into pieces of a predetermined size, and performs channel coding on the divided data. Furthermore, the encoding and decoding unit 250 decodes data output from the modulation and demodulation unit 230 and couples the decoded data.

The data transmitting and receiving unit 260 transmits and receives a Protocol Data Unit (PDU) and a Service Data Unit (SDU). More specifically, the data transmitting and receiving unit 260 performs assembly and disassembly of the PDU and SDU in multiple layers (a media access control layer (MAC), a radio link control layer (RLC), a packet data convergence protocol layer (PDCP), and the like). In addition, the data transmitting and receiving unit 260 executes error correction and retransmission control of data on the basis of HARQ (Hybrid Automatic Repeat Request).

The control unit 270 controls each functional block constituting the UE 200. In the embodiment, the control unit 270 constitutes a control unit that determines whether or not a specific condition related to altitude is satisfied on the basis of the information element related to the specific threshold. In a case where the specific condition is satisfied, the control unit 270 assumes, as a specification procedure for determining a cell to be used by the second terminal, the specification procedure based on levels of priority which is used to determine the cell to be used by the second terminal. The specification procedure may include at least one of a cell selection procedure in an idle state and a measurement report procedure in a connected state.

Secondly, a function block configuration of the gNB 100 will be described.

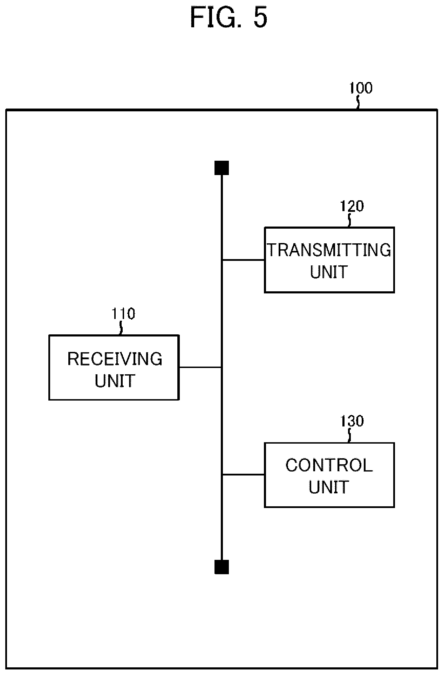

FIG. 5 is a function block configuration diagram of the gNB 100. As illustrated in FIG. 5, the gNB 100 includes a receiving unit 110, a transmitting unit 120, and a control unit 130.

The receiving unit 110 receives various signals from the UE 200. The receiving unit 110 may receive a UL signal via an UL channel such as the PUCCH or the PUSCH.

The transmitting unit 120 transmits various signals to the UE 200. The transmitting unit 120 may transmit a DL signal via a DL channel such as the PDCCH or the PDSCH. In the embodiment, the transmitting unit 120 constitutes a transmitting unit that transmits the information element related to the specific threshold in the frequency separation operation.

The control unit 130 controls the gNB 100. In the embodiment, the control unit 130 constitutes a control unit that assumes that the UE 200 determines whether or not a specific condition related to altitude is satisfied on the basis of the information element related to the specific threshold. In a case where the specific condition is satisfied, the control unit 130 assumes, as a specification procedure for determining a cell to be used by the second terminal, the specification procedure based on levels of priority which is used to determine the cell to be used by the second terminal. In a case where the specific condition is satisfied, for example, the control unit 130 executes a handover procedure on the basis of a report received from the UE 200 in the measurement report procedure and the levels of priority which is used to determine a cell to be used by the second terminal. In such a case, the specification procedure may include the handover procedure.

### (3) Problem

A problem will be described hereinafter. High-altitude UEs located at altitudes higher than a specific threshold, such as UEs mounted on UAVs, have a general problem that DL reception quality thereof is poor unlike low-altitude UEs located at altitudes lower than the specific threshold.

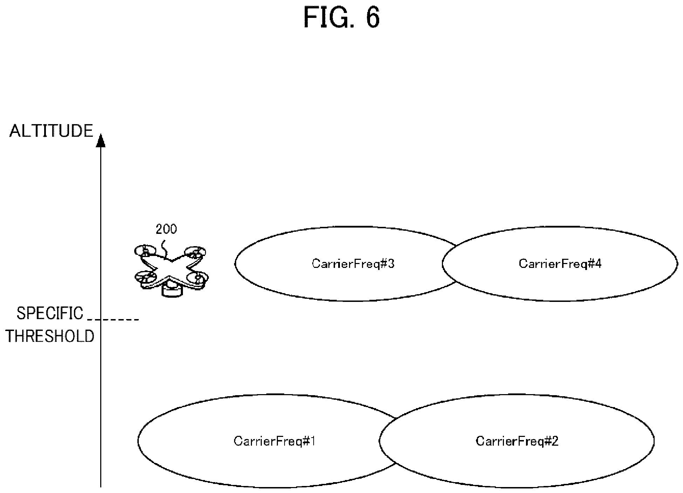

As illustrated in FIG. 6, therefore, an operation (frequency separation operation) where the second frequency (In FIG. 6, CarrierFreq#3 and CarrierFreq#4) for high-altitude UEs is separated from the first frequency (In FIG. 6, CarrierFreq#1 and CarrierFreq#2) for low-altitude UEs is being examined. With such a configuration, the DL reception quality of high-altitude UEs can be improved, and UL interference of the high-altitude UEs can be reduced.

With this background, the inventors have found, as a result of intensive studies, that it is necessary to appropriately determine a cell for high-altitude UEs in a case where frequency separation is applied.

### (4) Operation Examples

Operation examples will be described hereinafter. The specification procedure will be described separately for the cell selection procedure in the idle state (RRC Idle State) and the measurement report procedure in the connected state (RRC Connected State). The measurement report procedure may be considered to be a procedure used in the handover procedure.

### (4.1) Operation Example 1

In Operation Example 1, a cell selection procedure in the RRC Idle state will be described.

First, the UE 200 may determine whether or not the specific condition related to altitude is satisfied on the basis of the information element related to the specific threshold. The specific condition related to altitude may be that the altitude of the UE 200 exceeds the specific threshold, or may be that a state where the altitude of the UE 200 exceeds the specific threshold continues for a specific period T. The UE 200 may receive the information element related to the specific threshold. The information element may include an information element specifying the specific threshold, or may include an information element specifying the specific period T. The information element may be included in broadcast information (SIB) such as SIB2, SIB4, or SIB5, or may be included in the RRC message.

Although not particularly limited, the specific threshold may include two or more thresholds. When the specific threshold includes two thresholds, for example, UEs 200 may be classified into three types: low-altitude UEs, medium-altitude UEs, and high-altitude UEs. The specific period T may be common to each altitude range defined by the specific threshold, or may be different for each altitude range defined by the specific threshold.

Secondly, the levels of priority which is used to determine a cell to be used by a high-altitude UE (second terminal) located at an altitude higher than the specific threshold are defined. In Operation Example 1, an information element related to the levels of priority may be defined as an information element transmitted to the UE 200. The UE 200 may perform the cell selection procedure on the basis of the information element related to the levels of priority. The information element may be referred to as cellReselectionPriorityAltitude. A possible value range of the cellReselectionPriorityAltitude may be an integer of 0 to 7. A cell having a larger value of cellReselectionPriorityAltitude may have a higher level of priority to be selected in the cell selection procedure, and a cell having a smaller value of cellReselectionPriorityAltitude may have a lower level of priority to be selected in the cell selection procedure. A cell having a smaller value of cellReselectionPriorityAltitude, however, may have a higher level of priority to be selected in the cell selection procedure, and a cell having a larger value of cellReselectionPriorityAltitude may have a lower level of priority to be selected in the cell selection procedure, instead. The UE 200 may receive the information element related to the levels of priority (cellReselectionPriorityAltitude). The cellReselectionPriorityAltitude may be included in the broadcast information (SIB; System Information Block) such as SIB2, SIB4, or SIB5, or may be included in the RRC message. The RRC message may be RRCRelease received when a state transitions from an RRC Connected State to an RRC Idle State.

Thirdly, the UE 200 may receive information elements which are used to determine a cell to be used by the high-altitude UE. For example, the information elements may include a black cell list, a white cell list, a different-frequency neighboring cell list, and a different-frequency cell reselection parameter. These information elements may be different for each altitude range defined by the specific threshold.

The black cell list is a list of cells that are not permitted to be selected in a cell reselection procedure (in other words, cells that is prohibited from being selected in the cell reselection procedure). The information element specifying the black cell list may be referred to as InterFreqBlackCellListHighAltitude.

The white cell list is a list of cells that are permitted to be selected in the cell reselection procedure. The information element specifying the white cell list may be referred to as InterFreqWhiteCellListHighAltitude.

The different-frequency neighboring cell list is a list of different-frequency cells that can be selected in the cell reselection procedure. The information element specifying the different-frequency neighboring cell list may be referred to as InterFreqNeighborCellListHighAltitude.

The different-frequency cell reselection parameter is a parameter that defines a cell selection criterion. The cell selection criterion may be a criterion defined in 3GPP TS 38.304 § 5.2.3 (Cell Selection process). The different-frequency cell reselection parameter may include one or more parameters selected from Thresh_{X, HighP}, Thresh_{X, HighQ}, Thresh_{Serving_HighP}, Thresh_{Serving_HighQ}, Thresh_{X, LowP}, Threshx, _{LowQ}, Treselection_{RAT}, Treselection_{NR}, Treselection_{ERTRA}, S_{nonIntraSearchP}, and S_{nonIntraSearchQ}.

Furthermore, the information elements which are used to determine a cell to be used by the high-altitude UE may include an information element that defines criteria for high-altitude UEs (High altitude mobility state criteria). As the High altitude mobility state criteria, criteria defined in 3GPP TS 38.304 § 5.2.4.6 "Intra-frequency and equal priority inter-frequency Cell Reselection criteria" may be used. For example, the criteria for high-altitude UEs may include a criterion where a state in which reception quality of a new cell (for example, a neighboring cell) is better than reception quality of a serving cell continues over a certain period of time (hereinafter, Treselection_{NR} or Treselection_{EUTRA}). A cell ranking criterion Rₛ of a serving cell may be represented by R_{S} = Q_{meas,s} + Q_{hyst} - Qoffsetₜₑₘₚ. A cell ranking criterion Rₙ of a neighboring cell may be represented by Rₙ = Q_{meas,n} + Qoffset - Qoffsetₜₑₘₚ.

With such premises, the UE 200 may specify "Q_{hyst}" for each altitude range defined by the specific threshold. For example, the UE 200 may specify "Q_{hyst}" for each altitude range by adding a newly introduced parameter ("height dependent ScalingFactor for Qhyst") to "Q_{hyst}". The "height dependent ScalingFactor for Qhyst" may be included in the broadcast information (SIB) such as SIB2, SIB4, or SIB5, or may be included in the RRC message. Alternatively, the UE 200 may specify "Q_{hyst}" for each altitude range using a parameter related to speed of the UE 200 ("sf-High of "Speed dependent ScalingFactor for Qhyst", "sf-Medium of "Speed dependent ScalingFactor for Qhyst").

The UE 200 may specify "Treselection_{NR}" for each altitude range defined by the specific threshold. For example, the UE 200 may specify "Treselection_{NR}" for each altitude range by multiplying "Treselection_{NR}" by a newly introduced parameter ("height dependent ScalingFactor for Treselection_{NR}"). The "height dependent ScalingFactor for Treselection_{NR}" may be included in the broadcast information (SIB) such as SIB2, SIB4, or SIB5, or may be included in the RRC message. Alternatively, the UE 200 may specify "Treselection_{NR}" for each altitude range using a parameter related to speed of the UE 200 ("sf-High of "Speed dependent ScalingFactor for Treselection_{NR}", "sf-Medium of "Speed dependent ScalingFactor for Treselection_{NR}").

The UE 200 may specify "Treselection_{EUTRA}" for each altitude range defined by the specific threshold. For example, the UE 200 may specify "Treselection_{EUTRA}" for each altitude range by multiplying "Treselection_{EUTRA}" by a newly introduced parameter ("height dependent ScalingFactor for Treselection_{EUTRA}"). The "height dependent ScalingFactor for Treselection_{EUTRA}" may be included in the broadcast information (SIB) such as SIB2, SIB4, or SIB5, or may be included in the RRC message. Alternatively, the UE 200 may specify "Treselection_{EUTRA}" for each altitude range using a parameter related to speed of the UE 200 ("sf-High of "Speed dependent ScalingFactor for Treselection_{EUTRA}", "sf-Medium of "Speed dependent ScalingFactor for Treselection_{EUTRA}").

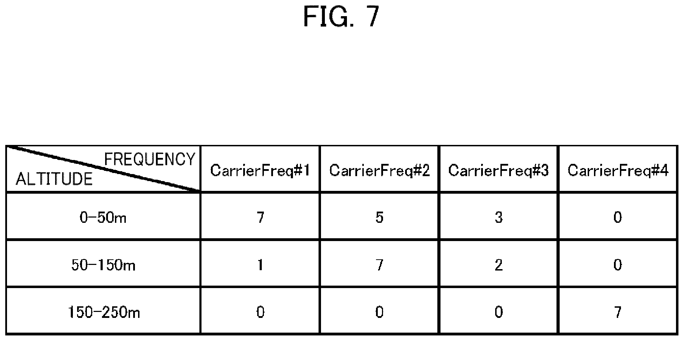

In Operation Example 1, a table where cellReselectionPriorityAltitude for each frequency is associated with each of the altitude ranges defined by the specific threshold may be defined. The table may have a configuration illustrated in FIG. 7.

As illustrated in FIG. 7, for example, a level of priority of CarrierFreq#1 is "7" at an altitude of 0 to 50 m, "1" at an altitude of 50 to 150 m, and "0" at 150 to 250 m. A level of priority of CarrierFreq#2 is "5" at the altitude of 0 to 50 m, "7" at the altitude of 50 to 150 m, and "0" at 150 to 250 m. A level of priority of CarrierFreq#3 is "3" at the altitude of 0 to 50 m, "2" at the altitude of 50 to 150 m, and "0" at 150 to 250 m. A level of priority of CarrierFreq#4 is "0" at the altitude of 0 to 50 m, "0" at the altitude of 50 to 150 m, and "7" at 150 to 250 m. That is, CarrierFreq#1 is mainly used by UEs 200 at altitudes of 0 to 50 m, CarrierFreq#2 and CarrierFreq#3 are used by UEs 200 at altitudes of 150 m or less, and CarrierFreq#4 is used by UEs 200 at altitudes of 150 m or more.

An information element for specifying a table may be included in the broadcast information (SIB) such as SIB2, SIB4, or SIB5, or may be included in the RRC message.

### (4.2) Operation Example 2

In Operation Example 2, the measurement report procedure in the RRC Connected State will be described. A measurement report transmitted to the gNB 100 in the measurement report procedure is used in the handover procedure. In Operation Example 2, the specification procedure may include the handover procedure. The handover procedure may be considered as a type of RRC Reconfiguration. The handover procedure may include addition, deletion, and modification of an SCell (Secondary Cell). The handover procedure may include a PSCell (Primary Secondary Cell).

First, the UE 200 may determine whether or not the specific condition related to altitude is satisfied on the basis of the information element related to the specific threshold. The specific condition related to altitude may be that the altitude of the UE 200 exceeds the specific threshold, or may be that a state where the altitude of the UE 200 exceeds the specific threshold continues for a specific period T. The UE 200 may receive the information element related to the specific threshold. The information element may include an information element specifying the specific threshold, or may include an information element specifying the specific period T. The information element may be included in the RRC message. The information element may be included in MeasConfig, or may be included in ReportConfig.

Secondly, the levels of priority which is used to determine a cell to be used by a high-altitude UE (second terminal) located at an altitude higher than the specific threshold are defined. In Operation Example 2, a parameter related to the levels of priority may be defined as a parameter used by the gNB 100 in the handover procedure. The parameter may be referred to as CarrierFreqPriorityHighAltitude. The gNB 100 may specify a target cell of the UE 200 on the basis of CarrierFreqPriorityHighAltitude among cells included in the measurement report.

In Operation Example 2, for example, the gNB 100 may set an event related to quality (for example, Events A1-A6, Events B1-B2, or the like) and an event related to altitude (for example, Event H1) in the UE 200. Events A1 to A6 and Events B1 to B2 may be events defined in 3GPP TS 38.331. Event H1 may be an event where the altitude of the UE 200 exceeds the specific threshold. In a case where the gNB 100 receives a measurement report that both the event related to quality and the event related to altitude are satisfied, the gNB 100 can recognize that the UE 200 is a high-altitude UE, and specifies a target cell of the UE 200 on the basis of CarrierFreqPriorityHighAltitude (that is, the UE 200 is handed over to a neighboring cell).

In Operation Example 2, a table where CarrierFreqPriorityHighAltitude for each frequency is associated with each of the altitude ranges defined by the specific threshold may be defined. The table may have the same configuration as that illustrated in FIG. 7. In such a case, the levels of priority illustrated in FIG. 7 are replaced by CarrierFreqPriorityHighAltitude.

### (5) Configuration Example of Information Elements

A configuration example of the information elements related to Operation Example 1 will be described hereinafter.

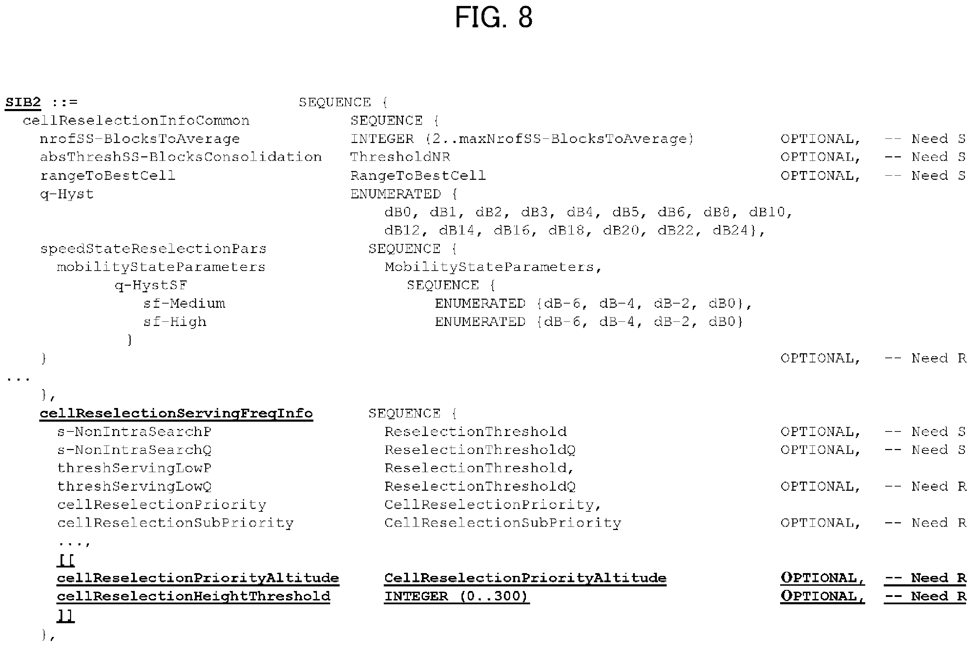

First, as illustrated in FIG. 8, SIB2 may include the information element related to the levels of priority (cellReselectionPriorityAltitude) and the information element related to the specific threshold (cellReselectionHeightThreshold). These information elements may be included in cellReselectionServingFreqInfo, instead.

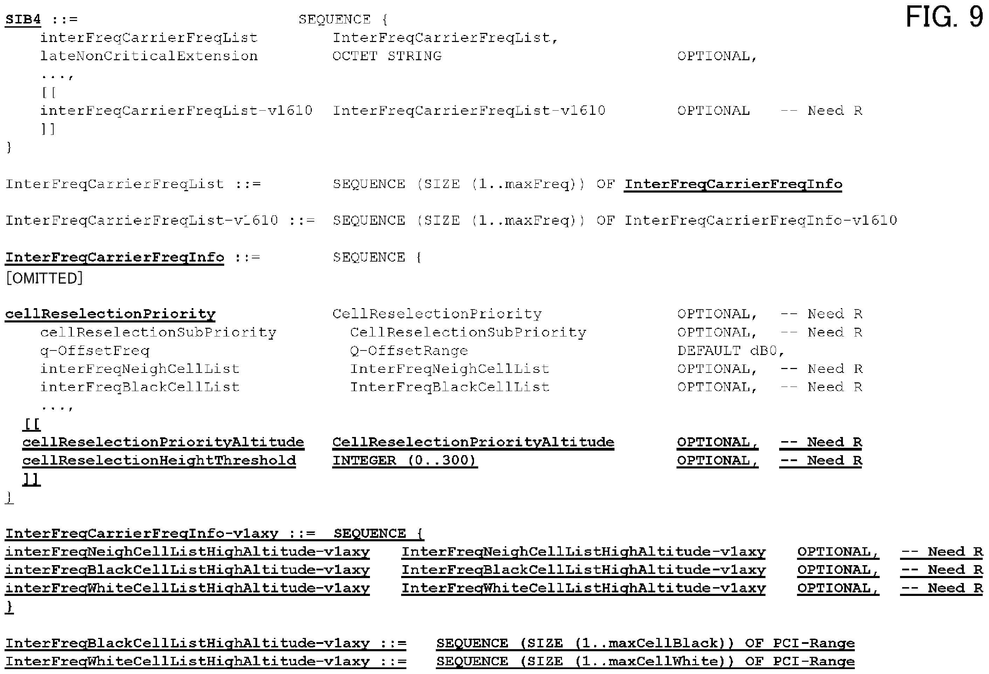

Secondly, as illustrated in FIG. 9, SIB4 may include the information element related to the levels of priority (cellReselectionPriorityAltitude) and the information element related to the specific threshold (cellReselectionHeightThreshold). These information elements may be included in InterFreqCarrierFreqInfo, instead.

SIB4 may include an information element (InterFreqCarrierFreqInfo-vlaxy) for specifying a table associated with an altitude range into which cellReselectionPriorityAltitude for each frequency is classified by the specific threshold. SIB4 may include an information element (InterFreqBlackCellListHighAltitudevlaxy) that specifies a black cell list for high-altitude UEs. SIB4 may include an information element (InterFreqWhiteCellListHighAltitude-vlaxy) that specifies a white cell list for high-altitude UEs.

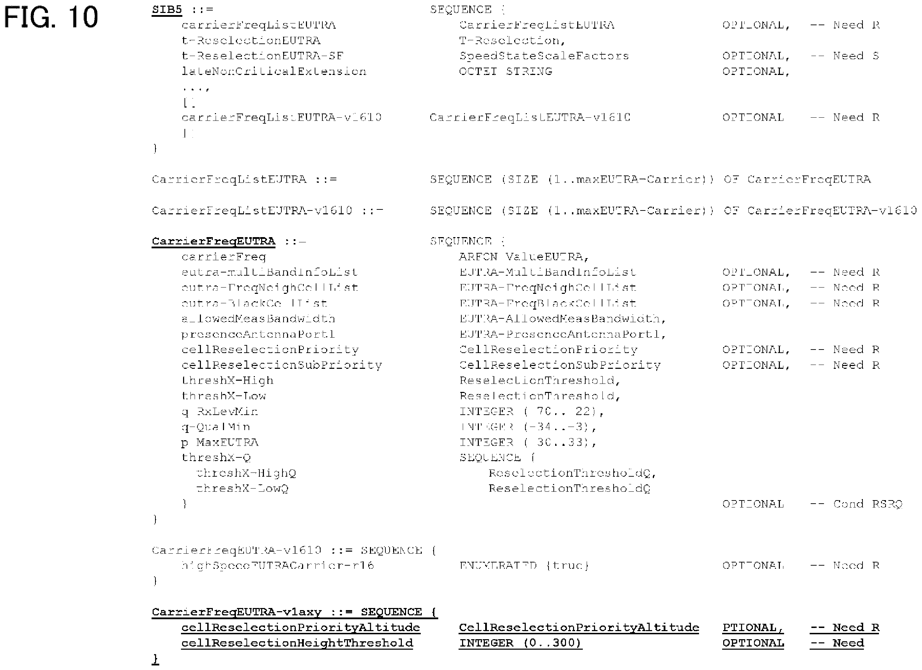

Thirdly, as illustrated in FIG. 10, SIB5 may include the information element related to the levels of priority (cellReselectionPriorityAltitude) and the information element related to the specific threshold (cellReselectionHeightThreshold). These information elements may be included in CarrierFreqEUTRA, instead.

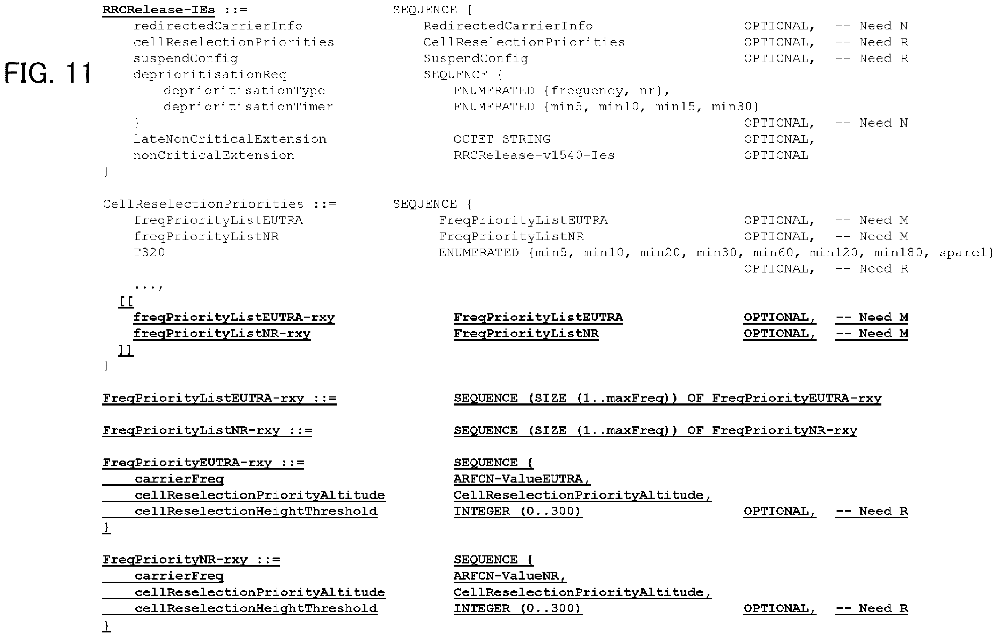

Fourthly, as illustrated in FIG. 11, RRCRelease may include the information element related to the levels of priority (cellReselectionPriorityAltitude) and the information element related to the specific threshold (cellReselectionHeightThreshold). These information elements may be included in FreqPriorityNR and FreqPriorityEUTRA, instead.

### (6) Action and Effect

In the embodiment, the UE 200 determines whether or not the specific condition related to altitude is satisfied on the basis of the information element related to the specific threshold. In a case where the specific condition is satisfied, the UE 200 assumes, as a specification procedure for determining a cell to be used by the second terminal (for example, a high-altitude UE), the specification procedure based on levels of priority which is used to determine a cell to be used by the second terminal. With such a configuration, since levels of priority which is used to determine a cell to be used by the second terminal are newly introduced, it is possible to appropriately determine a cell for a high-altitude UE.

### (7) Other Embodiments

Although the contents of the present invention have been described above with reference to the embodiment, the present invention is not limited to these, and it is obvious to those skilled in the art that various modifications and improvements can be made.

In the above disclosure, NR has been mainly described, but the above disclosure is not limited to this. The above disclosure may be applied to LTE. In such a case, the NG-RAN may be replaced by an E-UTRAN, and the gNB may be replaced by an eNB. The above disclosure may be applied to a case where NR and LTE are mixed.

In the disclosure described above, a UE 200 mounted on a UAV has been described as an example of a UE 200 that can be located at an altitude higher than the specific threshold. The above disclosure, however, is not limited to this. The UE 200 that can be located at an altitude higher than the specific threshold may be an ordinary UE 200 that is not mounted on a UAV, instead. For example, the above-described disclosure is also applicable to a case where an ordinary UE 200 is located on a high floor of a building.

In the above disclosure, a case where the information element related to the specific threshold is an information element that directly specifies the specific threshold has been described as an example. The above disclosure, however, is not limited to this. For example, the information element related to the specific threshold may be an information element that specifies atmospheric pressure. The information element related to the specific threshold may be an information element that specifies an index related to the altitude of the UE 200. That is, the information element related to the specific threshold may be an information element that indirectly specifies the specific threshold.

Although not specifically mentioned in the above disclosure, RAT/Frequency Selection Priority for high altitude may be defined as the levels of priority which is used to determine a cell to be used by a high-altitude UE (second terminal) located at an altitude higher than the specific threshold. For example, the core network (AMF; Access and Mobility management Function) may transmit a message including RAT/Frequency Selection Priority for high altitude to the gNB 100. The message may be one or more messages selected from an initial context setup request, a UE context modification request, and a Downlink NAS transport message. The core network (AMF; Access and Mobility management Function) may transmit, to the gNB 100, an altitude threshold (an example of the specific threshold) that specifies an altitude at which RAT/frequency Selection Priority for high altitude is applied, together with RAT/frequency Selection Priority for high altitude.

The block configuration diagram (FIG. 4 and FIG. 5) used in the description of the above-described embodiments illustrates blocks of functional units. Those functional blocks (structural components) can be realized by a desired combination of at least one of hardware and software. A means for realizing each functional block is not particularly limited. That is, each functional block may be realized by one device combined physically or logically. Alternatively, two or more devices separated physically or logically may be directly or indirectly connected (for example, using wired, wireless, or the like) to each other, and each functional block may be realized by these plural devices. The functional blocks may be realized by combining software with the one device or the plural devices described above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (structural component) that functions to transmit is called a transmitting unit or a transmitter. As described above, the means for realizing is not particularly limited.

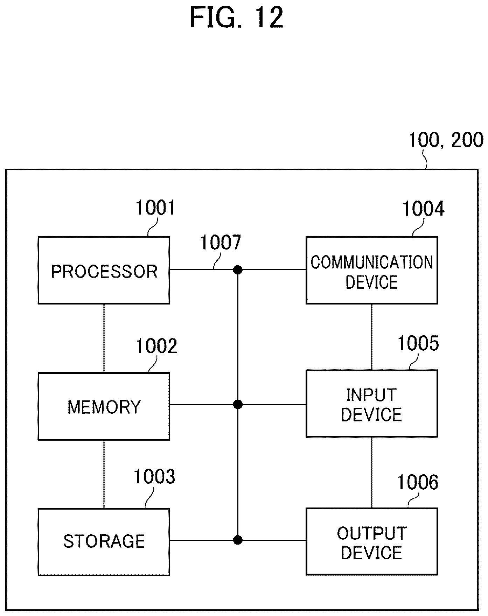

Furthermore, the gNB 100 and the UE 200 (apparatus) described above may function as computers for processing the radio communication method of the present disclosure. FIG. 12 is a diagram illustrating an example of a hardware configuration of the apparatus. As illustrated in FIG. 12, the apparatus may be configured as a computer device including a processor 1001, a memory 1002, a storage 1003, a communication device 1004, an input device 1005, an output device 1006, a bus 1007, and the like.

Note that, in the following description, the term "device" can be replaced with a circuit, a device, a unit, or the like. A hardware configuration of the apparatus can be constituted by including one or more of each of devices illustrated in the diagram, or can be constituted by without including a part of the devices.

Each functional block of the apparatus (see FIG. 4) is implemented by any of hardware elements of the computer device or a combination of the hardware elements.

Moreover, the processor 1001 performs computing by loading a predetermined software (computer program) on hardware such as the processor 1001 and the memory 1002, and realizes each function in the apparatus by controlling communication via the communication device 1004, and controlling at least one of reading and writing of data on the memory 1002 and the storage 1003.

The processor 1001, for example, operates an operating system to control the entire computer. The processor 1001 may be configured with a central processing unit (CPU), including an interface to a peripheral device, a controller, an arithmetic device, a register, and the like.

Moreover, the processor 1001 reads a computer program (program code), a software module, data, and the like from at least one of the storage 1003 and the communication device 1004 into the memory 1002, and executes various processes according to them. As the computer program, a computer program that causes the computer to execute at least a part of the operation in the above-described embodiments, is used. Alternatively, various processes described above may be executed by one processor 1001 or may be executed simultaneously or sequentially by two or more processors 1001. The processor 1001 may be implemented by using one or more chips. Note that the computer program may be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 may be referred to as a register, a cache, a main memory (main storage device), or the like. The memory 1002 can store a program (program code), a software module, or the like capable of executing a method according to the embodiment of the present disclosure.

The storage 1003 is a computer readable recording medium. For example, the storage 1003 may include at least one of an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 may be called an auxiliary storage device. The recording medium described above may be, for example, a database including at least one of the memory 1002 and the storage 1003, a server, or other appropriate medium.

The communication device 1004 is hardware (transmission and reception device) capable of performing communication between computers via at least one of a wired network and a wireless network. The communication device 1004 is also called, for example, a network device, a network controller, a network card, a communication module, or the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each of devices such as the processor 1001 and the memory 1002, is connected by a bus 1007 for communicating information. The bus 1007 may be configured using a single bus or a different bus for each device.

Further, the apparatus may be configured to include hardware such as a microprocessor, a digital signal processor (Digital Signal Processor: DSP), Application Specific Integrated Circuit (ASIC), Programmable Logic Device (PLD), Field Programmable Gate Array (FPGA), and the like. Some or all of the functional blocks may be realized by the hardware. For example, the processor 1001 may be implemented by using at least one of these hardware.

The notification of information is not limited to the aspects/embodiments described in the present disclosure, and may be performed using other methods. For example, the notification of information may be performed by physical layer signaling (e.g., Downlink Control Information (DCI), Uplink Control Information (UCI), higher layer signaling (e.g., RRC signaling, Medium Access Control (MAC) signaling, Broadcast Information (Master Information Block (MIB), System Information Block (SIB)), other signals, or combinations thereof. The RRC signaling may also be referred to as an RRC message, e.g., an RRC Connection Setup message, an RRC Connection Reconfiguration message, or the like.

Each of the above aspects/embodiments described in the present disclosure may be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, and the like of each of the above aspects/embodiments described in the present disclosure may be rearranged as long as there is no conflict. For example, the method described in the present disclosure presents the elements of the various steps using an exemplary sequence, and is not limited to the particular sequence presented.

The specific operation that is performed by the base station in the present disclosure may be performed by its upper node in some cases. In a network constituted by one or more network nodes having the base station, the various operations performed for communication with the terminal may be performed by at least one of the base station and other network nodes other than the base station (for example, MME, S-GW, or the like may be considered, but not limited thereto) . Although, in the above, an example in which one other network node other than the base station is used has been described, a combination of a plurality of other network nodes (for example, MME and S-GW) may be used.

Information, and signals (information and the like) can be output from a higher layer (or lower layer) to a lower layer (or higher layer). It may be input and output via a plurality of network nodes.

The input/output information may be stored in a specific location (for example, a memory) or may be managed in a management table. The information to be input/output can be overwritten, updated, or added. The information having been output can be deleted. The information having been input can be transmitted to another device.

The determination may be made by a value (0 or 1) represented by one bit or by Boolean value (Boolean: true or false), or by comparison of numerical values (for example, comparison with a predetermined value).

Each of the above aspects/embodiments described in the present disclosure may be used alone or in combination, or may be switched as it is executed. Further, notification of predetermined information (for example, notification of "being X") is not limited to being performed explicitly, but it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like described above may be represented by using any of a variety of different technologies. For example, data, instruction, command, information, signal, bit, symbol, chip, or the like that may be described throughout the above description, may be represented by voltage, current, electromagnetic wave, magnetic field or magnetic particle, optical field or photons, or a desired combination thereof.

Note that the terms described in this disclosure and the terms necessary for understanding the present disclosure may be replaced by terms having the same or similar meanings. For example, at least one of the channel and the symbol may be a signal (signaling). Also, the signal may be a message. Further, Component Carrier (CC) may be referred to as a carrier frequency, a cell, a frequency carrier, or the like.

The terms "system" and "network" used in the present disclosure can be used interchangeably.

Further, the information, the parameters, and the like described in the present disclosure can be represented by an absolute value, can be expressed as a relative value from a predetermined value, or can be represented by corresponding other information. For example, the radio resource can be indicated by an index.

The names used for the above-described parameters are not restrictive names in any respect. In addition, formulas and the like using these parameters may be different from those explicitly disclosed in the present disclosure. Because the various channels (for example, PUCCH, PDCCH, or the like) and information elements can be identified by any suitable names, the various names assigned to these various channels and information elements shall not be restricted in any way.

In the present disclosure, the terms "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the term such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of at least one of a base station and a base station subsystem that perform communication service in this coverage.

In the present disclosure, the terms "mobile station (Mobile Station: MS)," "user terminal," "user equipment (User Equipment: UE)," "terminal" and the like can be used interchangeably.

The mobile station is called by the persons skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, or a client, or with some other suitable term.

At least one of the base station and the mobile station may be called a transmitting device, a receiving device, a communication device, or the like. Note that, at least one of the base station and the mobile station may be a device mounted on a moving body, a moving body itself, or the like. The mobile body may be a vehicle (for example, car, plane, etc.), an unmanned mobile body (for example, drone, self-driving car,), or a robot (manned or unmanned). At least one of the base station and the mobile station can be a device that does not necessarily move during the communication operation. For example, at least one of the base station and the mobile station may be an Internet of Things (IoT) device such as a sensor.

The base station in the present disclosure may be read as a mobile station (user terminal, the same applies hereinafter). For example, each aspect/embodiment of the present disclosure may be applied to a configuration in which communication between the base station and the mobile station is replaced by communication between a plurality of mobile stations (for example, it may be called device-to-device (D2D), vehicle-to-everything (V2X), etc.). In this case, the mobile station may have the function of the base station. Further, words such as "up" and "down" may be replaced with words corresponding to communication between terminals (for example, "side"). For example, up channels, down channels, etc. may be replaced with side channels (or side links).

Similarly, the mobile station in the present disclosure may be read as a base station. In this case, the base station may have the function of the mobile station.

A radio frame may be composed of one or more frames in the time domain. Each of one or more frames in the time domain may be referred to as a subframe.

The subframe may be further configured by one or more slots in the time domain. The subframes may be a fixed time length (for example, 1 ms) independent of numerology.

Numerology may be a communication parameter applied to at least one of transmission and reception of a certain signal or channel. The numerology may represent one among, for example, subcarrier spacing (SubCarrier Spacing: SCS), bandwidth, symbol length, cyclic prefix length, transmission time interval (Transmission Time Interval: TTI), number of symbols per TTI, radio frame configuration, specific filtering process performed by a transceiver in the frequency domain, specific windowing process performed by a transceiver in the time domain, and the like.

A slot may be configured with one or a plurality of symbols (Orthogonal Frequency Division Multiplexing (OFDM) symbols, Single Carrier Frequency Division Multiple Access (SC-FDMA) symbols, etc.) in the time domain. The slot may be a unit of time based on the numerology.

The slot may include a plurality of minislots. Each minislot may be configured with one or more symbols in the time domain. The minislot may also be called a subslot. The minislot may be composed of symbols fewer than symbols in one slot. PDSCH (or PUSCH) transmitted in units of time greater than the minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the subframe and the TTI may be a subframe (1 ms) in the existing LTE, a period shorter than 1 ms (for example, 1-13 symbols), or a period longer than 1 ms. Note that, a unit representing TTI may be called a slot, a minislot, or the like instead of a subframe.

Here, TTI refers to a minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

TTI may be a transmission time unit such as a channel-encoded data packet (transport block), a code block, or a code word, or may be a processing unit such as scheduling or link adaptation. Note that when TTI is given, a time interval (for example, the number of symbols) in which a transport block, a code block, a code word, or the like are actually mapped may be shorter than TTI.

When one slot or one minislot is called TTI, one or more TTIs (that is, one or more slots or one or more minislots) may be a minimum time unit of scheduling. The number of slots (number of minislots) constituting the minimum time unit of scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, or the like. TTI shorter than the ordinary TTI may be referred to as a shortened TTI, a short TTI, a partial TTI (partial or fractional TTI), a shortened subframe, a short subframe, a minislot, a subslot, a slot, or the like.

Note that a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

A resource block (RB) is a resource allocation unit in the time domain and the frequency domain, and may include one or a plurality of continuous subcarriers in the frequency domain. The number of subcarriers included in the RB may be the same regardless of the numerology, for example, twelve. The number of subcarriers included in the RB may be determined based on the numerology.

Also, the time domain of the RB may include one or a plurality of symbols, and may have a length of 1 slot, 1 minislot, 1 subframe, or 1 TTI. The 1 TTI, the 1 subframe, or the like may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, or the like.

The resource block may be configured by one or more resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB relative to the common reference point of the carrier. The PRB may be defined in BWP and numbered within that BWP.

The BWP may include UL BWP (UL BWP) and DL BWP (DL BWP). One or more BWPs may be configured in one carrier for the UE.

At least one of the configured BWPs may be active, and the UE may not expect to transmit and receive certain signals/channels outside the active BWP. Note that "cell," "carrier," and the like in this disclosure may be read as "BWP."

The above-described structures such as a radio frame, a subframe, a slot, a minislot, and a symbol are merely examples. For example, the number of subframes included in the radio frame, the number of slots per the subframe or the radio frame, the number of minislots included in the slot, the number of symbols and RBs included in the slot or the minislot, the number of subcarriers included in the RB, the number of symbols included in the TTI, a symbol length, a cyclic prefix (CP) length, and the like, can be changed in various manner.

The terms "connected," "coupled," or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, and printed electrical connections, and as some non-limiting and non-exhaustive examples, by using electromagnetic energy having wavelengths in a radio frequency region, a microwave region, and a light (both of visible and invisible) region, and the like.

A reference signal may be abbreviated as Reference Signal (RS), and may be called pilot (Pilot) according to applicable standards.

The phrase "based on" used in the present disclosure, does not mean "based only on" unless explicitly stated otherwise. In other words, the phrase "based on" means both "based only on" and "based at least on".

A "means" in a configuration of each device may be replaced with "unit", "circuit", "device", or the like.

Any reference to elements using designations such as "first" and "second" used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive OR.

In the present disclosure, for example, if articles such as a, an, and the in English are added during translation, these articles shall include a plurality of nouns following these articles.

The terms "determining" and "deciding" used in this disclosure may encompass a wide variety of actions. The terms "determining" and "deciding" includes deeming that determining and deciding have been performed by, for example, judging, calculating, computing, processing, deriving, investigating, searching (looking up, search, inquiry) (e.g., searching in a table, database, or other data structure), ascertaining, and the like. Also, the terms "determining" and "deciding" includes deeming that determining and deciding have been performed by, for example, receiving (e.g., receiving information), transmitting (e.g., transmitting information), inputting (input), outputting (output), and accessing (e.g., accessing data in a memory), and the like. Further, the terms "determining" and "deciding" include deeming that determining and deciding have been performed by, for example, resolving, selecting, choosing, establishing, comparing, and the like. In other words, the terms "determining" and "deciding" include deeming that "determining" and "deciding" regarding some actions has been performed. Furthermore, the term "determining (deciding)" may be read as "assuming," "expecting," "considering," and the like.

In the present disclosure, the phrase "A and B are different" may mean "A and B are different from each other". Note that the phrase may mean "A and B are each different from C". Terms such as "leave," "coupled," and the like may also be interpreted in the same manner as "different."

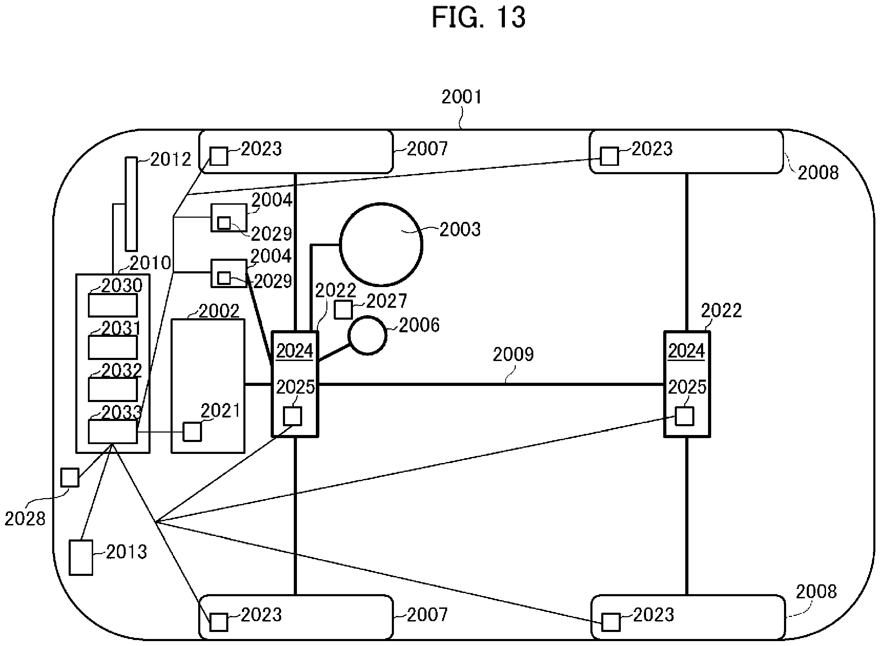

FIG. 13 illustrates a configuration example of a vehicle 2001. As illustrated in FIG. 13, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 includes, for example, an engine, a motor, and a hybrid of an engine and a motor.

The steering unit 2003 includes at least a steering wheel (also referred to as a handle), and is configured to steer at least one of front wheels and rear wheels, based on the operation of the steering wheel operated by a user.

The electronic control unit 2010 includes a microprocessor 2031, a memory (ROM, RAM) 2032, and a communication port (IO port) 2033. The electronic control unit 2010 receives signals from various sensors 2021 to 2027 provided in the vehicle. The electronic control unit 2010 may be called an ECU (electronic control unit).

The signals from the various sensors 2021 to 2028 include a current signal from a current sensor 2021 for sensing the current of a motor, a rotation speed signal of front wheels and rear wheels acquired by a rotation speed sensor 2022, a pressure signal of front wheels and rear wheels acquired by an air pressure sensor 2023, a vehicle speed signal acquired by a vehicle speed sensor 2024, an acceleration signal acquired by an acceleration sensor 2025, an accelerator pedal depression amount signal acquired by an accelerator pedal sensor 2029, a brake pedal depression amount signal acquired by a brake pedal sensor 2026, an operation signal of a shift lever acquired by a shift lever sensor 2027, and a detection signal, which is acquired by an object detection sensor 2028, for detecting obstacles, vehicles, pedestrians, and the like.

The information service unit 2012 includes: various devices such as a car navigation system, an audio system, a speaker, a television, and a radio for providing various information such as driving information, traffic information, and entertainment information; and one or more ECUs for controlling these devices. The information service unit 2012 provides various multimedia information and multimedia services to the occupants of the vehicle 1 by using information acquired from an external device via a communication module 2013 or the like.

A driving support system unit 2030 includes various devices for providing functions to prevent accidents or reduce the driver's driving load, such as a millimeter wave radar, light detection and ranging (LiDAR), a camera, a positioning locator (for example, GNSS), map information (for example, high-definition (HD) maps, autonomous vehicle (AV) maps, or the like), a gyroscopic system (for example, Inertial Measurement Unit (IMU), Inertial Navigation System (INS), or the like), an artificial intelligence (AI) chip, an AI processor, or the like; and one or more ECUs for controlling these devices. In addition, the driving support system unit 2030 transmits and receives various kinds of information via the communication module 2013 to realize a driving support function or an automatic driving function.

The communication module 2013 can communicate with the microprocessor 2031 and elements of the vehicle 1 via the communication port. For example, the communication module 2013 transmits and receives data via the communication port 2033 to and from the drive unit 2002, the steering unit 2003, the accelerator pedal 2004, the brake pedal 2005, the shift lever 2006, the right and left front wheels 2007, the right and left rear wheels 2008, the axle 2009, the microprocessor 2031 and the memory (ROM, RAM) 2032 in the electronic control unit 2010, and the sensors 2021 to 2028 all of which are provided in the vehicle 2001.

The communication module 2013 is a communication device that can be controlled by the microprocessor 2031 of the electronic control unit 2010, and can communicate with an external device. For example, the communication module 2013 transmits and receives various kinds of information with the external device by means of radio communication. The communication module 2013 may be provided inside or outside the electronic control unit 2010. The external device may be, for example, a base station, a mobile station, or the like.

The communication module 2013 transmits a current signal from a current sensor, which is input to the electronic control unit 2010, to an external device by means of radio communication. In addition, the communication module 2013 transmits to an external device by means of radio communication, a rotation speed signal of the front and rear wheels acquired by the rotation speed sensor 2022, an air pressure signal of the front and rear wheels acquired by the air pressure sensor 2023, a vehicle speed signal acquired by the vehicle speed sensor 2024, an acceleration signal acquired by the acceleration sensor 2025, an accelerator pedal depression amount signal acquired by the accelerator pedal sensor 2029, a brake pedal depression amount signal acquired by the brake pedal sensor 2026, a shift lever operation signal acquired by the shift lever sensor 2027, and a detection signal, which is acquired by the object detection sensor 2028, for detecting obstacles, vehicles, pedestrians, and the like. These signals are input to the electronic control unit 2010.

The communication module 2013 receives various pieces of information (traffic information, signal information, inter-vehicle information, and the like) transmitted from an external device, and displays them on the information service unit 2012 provided in the vehicle. The communication module 2013 also stores various pieces of information received from the external device in the memory 2032 usable by the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021 to 2028, and the like all of which are provided in the vehicle 2001.

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 radio communication system
20 NG-RAN
100 gNB
200 UE
210 radio signal transmitting and receiving unit
220 amplifier unit
230 modulation and demodulation unit
240 control signal and reference signal processing unit
250 encoding and decoding unit
260 data transmitting and receiving unit
270 control unit
1001processor
1002 memory
1003 storage
1004 communication device
1005 input device
1006output device
1007bus
2001 vehicle
2002 drive unit
2003 steering unit
2004accelerator pedal
2005brake pedal
2006shift lever
2007 left and right front wheels
2008 left and right rear wheels
2009 axle
2010electronic control unit
2012 information service unit
2013 communication module
2021current sensor
2022rotation speed sensor
2023air pressure sensor
2024vehicle speed sensor
2025acceleration sensor
2026brake pedal sensor
2027 shift lever sensor
2028object detection sensor
2029accelerator pedal sensor
2030driving support system unit
2031microprocessor
2032memory (ROM, RAM)
2033 communication port

## Claims

1. A terminal comprising:
a receiving unit that receives an information element related to a specific threshold in an operation where a first frequency for a first terminal located at an altitude lower than the specific threshold and a second frequency for a second terminal located at an altitude higher than the specific threshold are separated from each other; and
a control unit that determines whether or not a specific condition related to altitude is satisfied on a basis of the information element related to the specific threshold,
wherein if the specific condition is satisfied, the control unit assumes, as a specification procedure for determining a cell to be used by the second terminal, the specification procedure based on levels of priority which is used to determine the cell to be used by the second terminal.

2. The terminal according to claim 1,
wherein the specification procedure includes at least one of a cell selection procedure in an idle state and a measurement report procedure in a connected state.

3. The terminal according to claim 2,
wherein, in a case where the specification procedure is the cell selection procedure,
the receiving unit receives an information element related to the levels of priority which is used to determine the cell to be used by the second terminal, and,
if the specific condition is satisfied, the control unit performs the cell selection procedure on a basis of the information element related to the levels of priority.

4. The terminal according to claim 2 or 3,
wherein, in a case where the specification procedure is the cell selection procedure,
the receiving unit receives an information element which is used to determine the cell to be used by the second terminal, and,
if the specific condition is satisfied, the control unit performs the cell selection procedure on a basis of the information element which is used to determine the cell.

5. The terminal according to claim 2,
wherein, in a case where the specification procedure is the measurement report procedure,
if the specific condition is satisfied, the control unit assumes a handover procedure according to the measurement report procedure.

6. A base station comprising:
a transmitting unit that transmits an information element related to a specific threshold in an operation where a first frequency for a first terminal located at an altitude lower than the specific threshold and a second frequency for a second terminal located at an altitude higher than the specific threshold are separated from each other; and
a control unit that assumes that a terminal determines whether or not a specific condition related to altitude is satisfied on a basis of the information element related to the specific threshold,
wherein if the specific condition is satisfied, the control unit assumes, as a specification procedure for determining a cell to be used by the second terminal, the specification procedure based on levels of priority which is used to determine the cell to be used by the second terminal.

7. A radio communication system comprising:
a terminal; and
a base station,
wherein the terminal includes
a receiving unit that receives an information element related to a specific threshold in an operation where a first frequency for a first terminal located at an altitude lower than the specific threshold and a second frequency for a second terminal located at an altitude higher than the specific threshold are separated from each other, and
a control unit that determines whether or not a specific condition related to altitude is satisfied on a basis of the information element related to the specific threshold, and
if the specific condition is satisfied, the control unit assumes, as a specification procedure for determining a cell to be used by the second terminal, the specification procedure based on levels of priority which is used to determine the cell to be used by the second terminal.

8. A radio communication method comprising the steps of:
receiving an information element related to a specific threshold in an operation where a first frequency for a first terminal located at an altitude lower than the specific threshold and a second frequency for a second terminal located at an altitude higher than the specific threshold are separated from each other;
determining whether or not a specific condition related to altitude is satisfied on a basis of the information element related to the specific threshold; and
assuming, if the specific condition is satisfied, as a specification procedure for determining a cell to be used by the second terminal, the specification procedure based on levels of priority which is used to determine the cell to be used by the second terminal.
